# DEMANDE DE BREVET EUROPEEN

(11) **EP 2 672 477 A1**
(43) Date de publication de la demande: **11.12.2013**
(21) Numéro de dépôt: 13169935.7
(22) Date de dépôt: 30.05.2013
(51) Int. Cl.: G09B 21/00

(54) **Procédé pour rendre accessible, notamment à des personnes visuellement déficientes, un dispositif de traitement d'images**

(30) Priorité: 04.06.2012 FR 1255155
(71) Demandeur: Konica Minolta Business Solutions France, 78420 Carrieres Sur Seine (FR)
(72) Inventeur: Loiseau, Alain, 92420 Vaucresson (FR); Hafsaoui, Khalid, 78190 Trappes (FR); Texier, Céline, 92110 Clichy (FR)
(74) Mandataire: Gevers France

(57) **Abrégé**

Selon l'invention, le procédé est remarquable par le fait que l'on effectue les étapes suivantes :
- on sélectionne au moins certaines des fonctions du dispositif (D) destinées à être accessibles notamment par des personnes visuellement déficientes ;
- on paramètre l'écran tactile (ET) du dispositif (D) pour permettre un accès direct, par leur zone d'activation associée (2), aux fonctions du dispositif (D) sélectionnées ;
- on forme une couche transparente aux dimensions (L, I) dudit écran (ET), qui comprend des mots en Braille, constitués d'un ou plusieurs motifs en Braille, représentatifs chacun d'une des fonctions sélectionnées, lesdits mots en Braille étant répartis sur la couche de telle façon à pouvoir être mis en correspondance avec des zones d'activation (2) des fonctions sélectionnées qui leur sont associées ; et
- on positionne, avec ajustement, la couche transparente ainsi formée sur l'écran tactile (ET) paramétré pour mettre en correspondance les mots en Braille avec les zones d'activation (2) des fonctions sélectionnées.

## Description

La présente invention se rapporte aux dispositifs multifonctions de traitement d'images, tels que les photocopieurs, les imprimantes, les fac-similés, etc., équipés d'un écran tactile de commande.

On sait que l'écran tactile de commande, qui équipe chacun de ces dispositifs multifonctions, permet à un utilisateur de sélectionner et d'activer une fonction parmi plusieurs (par exemple la sélection d'un format particulier de papier pour un photocopieur) soit par un accès direct via un menu principal, soit après l'ouverture d'un ou plusieurs sous-menus à partir du menu principal.

De façon connue, chaque fonction est définie par une zone d'activation de l'écran qui se présente généralement sous une forme rectangulaire et qui comporte une ou plusieurs inscriptions représentatives de la fonction (par exemple du texte ou des symboles), explicites pour l'utilisateur. L'activation d'une fonction souhaitée par un utilisateur est alors habituellement obtenue par un appui, plus ou moins prolongé, d'un doigt de celui-ci sur la zone d'activation correspondante de l'écran tactile.

Cependant, si la sélection et l'activation s'avèrent intuitives et aisées pour un utilisateur ayant toutes ses facultés visuelles, il n'en est pas de même pour un utilisateur visuellement déficient. En effet, un tel utilisateur, lorsqu'il se présente devant l'écran tactile, ne dispose d'aucune information pour savoir si le menu affiché correspond au menu principal ou à un sous-menu particulier. En outre, même s'il a connaissance du menu affiché, il demeure dans l'incapacité de visualiser et de distinguer les zones d'activation des différentes fonctions.

La présente invention a pour objet de remédier à cet inconvénient et, notamment, de rendre accessible au moins certaines des fonctions d'un écran tactile d'un dispositif de traitement d'images à des personnes visuellement déficiences.

A cette fin, selon l'invention, le procédé pour rendre accessible, notamment à des personnes visuellement déficientes, un dispositif de traitement d'images qui comporte un écran tactile, ledit écran permettant l'accès à une pluralité de fonctions du dispositif de traitement par l'activation tactile de zones d'activation correspondantes,
est remarquable par le fait que l'on effectue les étapes suivantes :
- on sélectionne au moins certaines des fonctions du dispositif destinées à être accessibles notamment par des personnes visuellement déficientes ;
- on paramètre l'écran tactile pour permettre un accès direct, par leur zone d'activation associée, aux fonctions du dispositif sélectionnées ;
- on forme une couche transparente aux dimensions dudit écran, qui comprend des mots en Braille, constitués d'un ou plusieurs motifs en Braille, représentatifs chacun d'une des fonctions sélectionnées, lesdits mots en Braille étant répartis sur la couche de telle façon à pouvoir être mis en correspondance avec les zones d'activation des fonctions sélectionnées qui leur sont associées ; et
- on positionne, avec ajustement, la couche transparente ainsi formée sur l'écran tactile paramétré pour mettre en correspondance les mots en Braille avec les zones d'activation des fonctions sélectionnées.

Ainsi, grâce à l'invention, au moins certaines des fonctions d'un dispositif de traitement d'images deviennent accessibles à des personnes malvoyantes ou aveugles, tout en restant activables par des personnes bénéficiant de toutes leurs facultés visuelles. En effet, la transparence de la couche ainsi formée leur permet de lire, à travers celle-ci, les inscriptions et/ou les symboles des zones d'activation. En outre, un utilisateur visuellement déficient peut - sous réserve qu'il ait appris le Braille - lire les mots en Braille de la couche transparente pour ensuite activer la fonction qui l'intéresse par un appui sur le mot en Braille correspondant.

En particulier, selon l'invention, le paramétrage de l'écran tactile est réalisé de telle manière que les fonctions sélectionnées puissent être accessibles en permanence et directement à partir de l'écran tactile, sans manipulation supplémentaire.

En outre, lors de l'étape de paramétrage de l'écran, on définit de préférence les zones d'activation associée à chacune des fonctions sélectionnées pour qu'elles soient accessibles par accès direct.

De façon avantageuse, la couche transparente formée comporte une face électrostatique qui permet son maintien en position sur l'écran tactile sous l'effet de forces électrostatiques.

De plus, préalablement à sa pose sur l'écran, la face électrostatique de la couche transparente peut avantageusement être recouverte par un film de protection amovible, de préférence d'épaisseur égale à 5 µm.

Dans une réalisation conforme à l'invention, la couche transparente formée présente une épaisseur approximativement égale à 310 µm.

En outre, la couche transparente formée présente de préférence un grammage de 385 g/m2.

La présente invention concerne également une couche transparente qui est formée lors d'un procédé du type de celui décrit ci-dessus et qui est destinée à être apposée sur l'écran tactile d'un dispositif de traitement d'images, ledit écran permettant l'accès à une pluralité de fonctions du dispositif de traitement par l'activation tactile de zones d'activation correspondantes. Selon l'invention, ladite couche transparente comprend des mots en Braille, constitués d'un ou plusieurs motifs en Braille, représentatifs chacun d'une des fonctions du dispositif, lesdits mots en Braille étant répartis sur la couche de telle façon à pouvoir être mis en correspondance avec les zones d'activation des fonctions qui leur sont associées.

Les figures du dessin annexé feront bien comprendre comment l'invention peut être réalisée. Sur ces figures, des références identiques désignent des éléments semblables.
La figure 1 représente, dans une vue schématique du dessus, un écran tactile d'un dispositif de traitement d'images paramétré conformément à la présente invention.
La figure 2 illustre schématiquement, dans une vue de face en perspective, une couche transparente conforme à la présente invention.

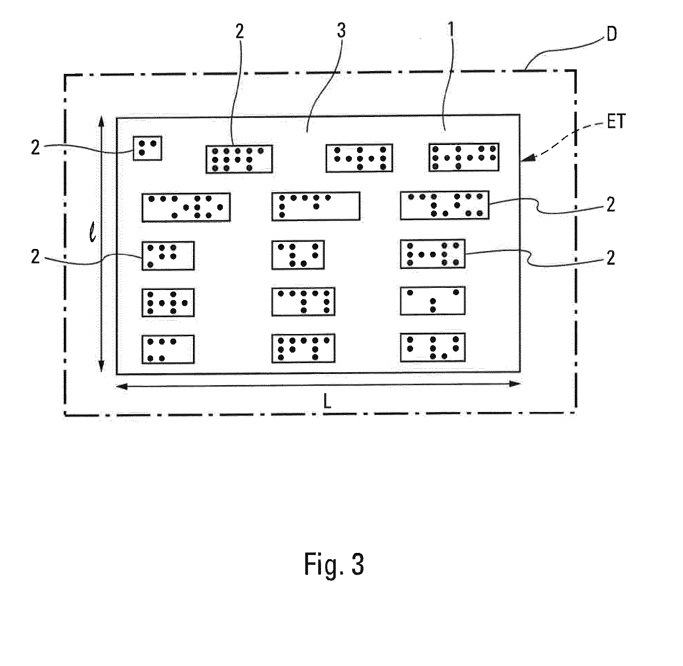

La figure 3 montre l'écran tactile paramétré de la figure 1 recouvert par la couche transparente de la figure 2.

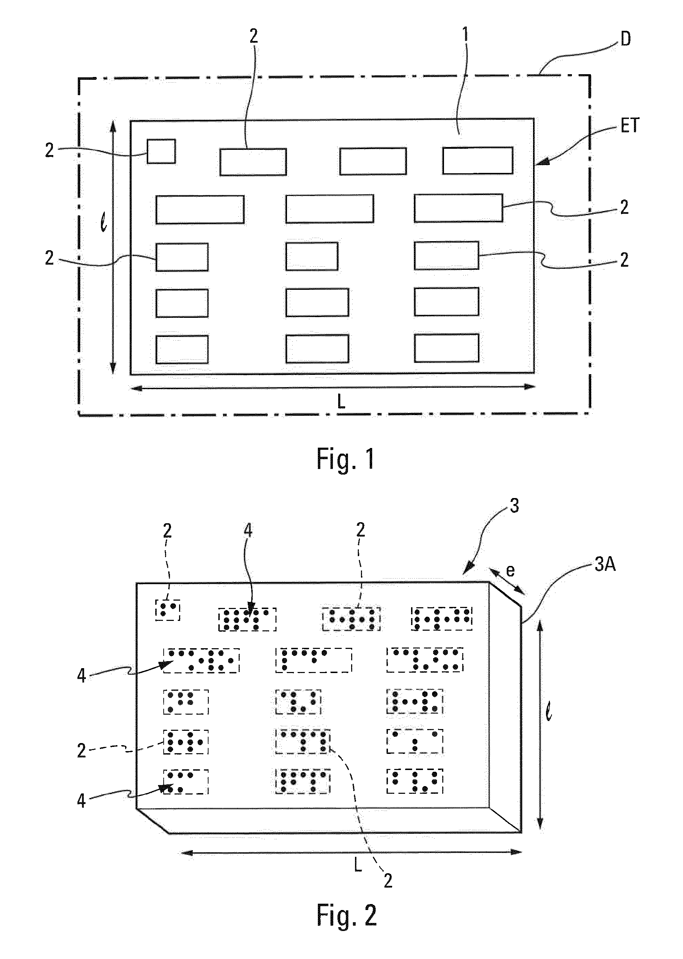

Sur la figure 1, on a représenté un écran tactile ET d'un dispositif de traitement d'images D, par exemple un photocopieur multifonction. L'écran tactile ET est formé, sur sa partie supérieure, d'une couche rigide 1, par exemple à base de verre. L'écran tactile ET permet l'accès à plusieurs fonctions du dispositif de traitement D, telles que la réalisation d'un agrandissement, la sélection d'un format de papier, la sélection d'une reproduction en couleur ou en noir et blanc, l'agrafage des documents, l'impression recto verso, etc.

De façon connue, à chaque fonction est associée une zone d'activation 2 de l'écran ET, par exemple de forme rectangulaire. Chaque zone d'activation 2 comprend une ou plusieurs inscriptions représentatives de la fonction correspondante (non représentées sur la figure 1), sous la forme de texte et/ou des symboles, de façon à ce qu'un utilisateur puisse aisément identifier visuellement chacune des fonctions de l'écran tactile ET du dispositif D.

La mise en oeuvre d'une des fonctions du dispositif D requiert l'activation tactile de la zone d'activation 2 correspondante, par exemple par un toucher, plus ou moins long, du doigt d'un utilisateur.

Selon l'invention, pour rendre accessible à des personnes visuellement déficientes (malvoyantes ou aveugles) le dispositif de traitement d'images D, on sélectionne préalablement au moins certaines des fonctions du dispositif D, de préférence toutes, que l'on souhaite pouvoir être utilisées par ces personnes présentant un handicap visuel.

Ensuite, on paramètre l'écran tactile ET pour permettre un accès direct, par leur zone d'activation 2 associée, aux fonctions du dispositif D sélectionnées.

Par accès direct, on entend l'activation d'une fonction sélectionnée donnée du dispositif D par un seul toucher (ou clic) de la zone d'activation 2 correspondante.

Lors de l'étape de paramétrage précitée, on définit les zones d'activation 2 associée aux fonctions sélectionnées, de telle manière à ce qu'elles soient accessibles par un accès direct. Autrement dit, dans l'exemple de réalisation décrit de l'invention, aucun sous-menu permettant l'accès à des fonctions n'est mis en oeuvre. Bien entendu, en variante, l'utilisation de tels sous-menus est néanmoins envisageable.

Ainsi, lors de la définition des zones d'activation 2 des fonctions sélectionnées, on organise les zones d'activation 2 correspondantes de ces différentes fonctions pour les rendre accessibles par accès direct.

Par la suite, une fois le paramétrage de l'écran tactile ET du dispositif D effectué, on réalise une couche transparente 3 aux mêmes dimensions que celles de l'écran ET du dispositif D (à savoir de longueur L et de largeur 1).

De préférence, l'épaisseur e de la couche transparente 3 est approximativement égale à 310 µm. Bien entendu, en variante, cette épaisseur peut être différente.

La couche transparente 3 comporte des mots en Braille 4, formés chacun de motifs en Braille. Chaque mot en Braille 4 est représentatif d'une des fonctions sélectionnées.

En outre, les mots en Braille 4 sont agencés sur la couche transparente 3, de telle façon à pouvoir être mis en correspondance avec la zone d'activation 2 de la fonction sélectionnée qui leur est associée, une fois la couche 3 rapportée sur l'écran tactile ET du dispositif D.

De plus, la couche transparente 3 présente une face plane électrostatique 3A, à savoir celle qui est destinée à être rapportée sur l'écran tactile ET, permettant son maintien en position sur ce dernier sous l'effet de forces électrostatiques.

La couche transparente 3, qui présente une transparence comparable à celle de l'eau, est formée à partir d'un complexe polyester/vinyle présentant un grammage de 385 g/m2. La couche transparente 3 est résistante à l'eau, de manière à pouvoir être nettoyé (à l'aide d'eau ou de produits de lavage doux).

Par ailleurs, un film de protection amovible (non représenté sur les figures) recouvre la face plane électrostatique 3A de la couche transparente 3 destinée à être apposée sur l'écran tactile ET, pour la protéger et éviter la présence de poussières sur celle-ci avant d'être positionnée sur l'écran ET.

Ce film de protection, de préférence de 15 µm d'épaisseur, présente un grammage de l'ordre de 13 g/m2.

Dès lors que la couche transparente 3 a été réalisée, on peut l'apposer, avec ajustement, sur l'écran tactile ET paramétré, après avoir retiré le film de protection, de manière à mettre en correspondance les mots en Braille 4 avec les zones d'activation 3 des fonctions sélectionnées.

On comprendra que la surface de l'écran ET qui reçoit la couche transparente 3 doit avoir été nettoyée préalablement pour garantir un maintien de qualité de ladite couche 3.

Ainsi, un utilisateur présentant un handicap visuelle peut accéder aux fonctions sélectionnées du dispositif de traitement d'images 3 est parcourant avec un ou plusieurs doigts l'écran tactile ET. Après avoir reconnue la fonction désirée, l'utilisateur doit appuyer sur le mot de Braille correspondant pour l'activer. De cette façon, l'utilisateur visuellement déficient peut utiliser le dispositif de traitement d'images D. En outre, la transparence de la couche 3 permet l'utilisation de l'écran tactile ET à une personne ayant toutes ses facultés visuelles, puisque celle-ci peut lire à travers, les inscriptions et/ou les symboles des zones d'activation.

## Revendications

1. Procédé pour rendre accessible à des personnes visuellement déficientes, un dispositif, notamment un dispositif de traitement d'images, comportant un écran tactile (ET) à zones d'activation (2), permettant à un utilisateur de sélectionner et d'activer une fonction parmi plusieurs, soit par accès à un menu principal, soit par l'ouverture d'un ou plusieurs sous-menus à partir du menu principal, ledit écran tactile (ET) portant une couche transparente (3) munie de mots en Braille,
**caractérisé en ce que** :
- on sélectionne au moins certaines des fonctions du dispositif destinées à être accessibles aux dites personnes visuellement déficientes ;
- on paramètre l'écran tactile (ET) pour permettre un accès direct, par leur zone d'activation associée (2), aux fonctions du dispositif (D) sélectionnées ; et
- on met en correspondance lesdits mots en Braille (4) avec les zones d'activation (G) des fonctions sélectionnées.

2. Procédé selon la revendication 1, dans lequel la couche transparente (3) comporte une face électrostatique (3A) qui permet son maintien en position sur l'écran tactile (ET) sous l'effet de forces électrostatiques.

3. Procédé selon la revendication 2, dans lequel, préalablement à sa pose sur l'écran (ET), la face électrostatique (3A) de la couche transparente (3) est recouverte par un film de protection amovible, de préférence d'épaisseur égale à 15 µm.

4. Procédé selon l'une des revendications précédentes, dans lequel la couche transparente (3) présente une épaisseur (e) approximativement égale à 310 µm.

5. Procédé selon l'une des revendications précédentes, dans lequel la couche transparente (3) présente un grammage de 385 g/m2.

6. Couche transparente qui est formée lors d'un procédé tel que spécifié sous les revendications 1 à 5 et qui est destinée à être apposée sur l'écran tactile (ET) d'un dispositif de traitement d'images (D), ledit écran (ET) permettant l'accès à une pluralité de fonctions du dispositif de traitement (D) par l'activation tactile de zones d'activation (2) correspondantes,
**caractérisée en ce qu'**elle comprend des mots en Braille (4), constitués d'un ou plusieurs motifs en Braille, représentatifs chacun d'une des fonctions du dispositif (D), lesdits mots en Braille (4) étant répartis sur la couche transparente (3), de telle façon à pouvoir être mis en correspondance avec les zones d'activation (2) des fonctions qui leur sont associées.

7. Dispositif de traitement d'images comportant un écran tactile (ET), ledit écran (ET) permettant l'accès à une pluralité de fonctions du dispositif de traitement (D) par l'activation tactile de zones d'activation correspondantes (2),
**caractérisé en ce que** l'écran tactile (ET) est paramétré conformément au procédé spécifié sous l'une des revendications 1 à 5 et est recouvert par une couche transparente du type de celle spécifiée sous la revendication 6.
